(19) **Europäisches Patentamt / European Patent Office / Office européen des brevets**

(11) **EP 1 621 856 B1**

(12) **EUROPEAN PATENT SPECIFICATION**

(45) Date of publication and mention
of the grant of the patent:
**23.05.2012 Bulletin 2012/21**

(51) Int Cl.:
*G01F 1/66* (2006.01)    *G01F 25/00* (2006.01)
*G01P 5/24* (2006.01)

(21) Application number: **05015770.0**

(22) Date of filing: **20.07.2005**

(54) **Doppler ultrasonic flow velocity profile meter**

Doppler-Ultraschallströmungsgeschwindigkeitsprofilmesser

Capteur d'un profil de vitesse d'un flux par effet doppler

(84) Designated Contracting States:
**CH DE FR GB IT LI**

(30) Priority: **20.07.2004 JP 2004210965**

(43) Date of publication of application:
**01.02.2006 Bulletin 2006/05**

(73) Proprietor: **Fuji Electric Co., Ltd.**
**Kawasaki-shi**
**Kanagawa (JP)**

(72) Inventors:
• **Kishiro, Masami**
**Chiyoda-ku**
**Tokyo 102-0075 (JP)**
• **Yamamoto, Toshihiro**
**Chiyoda-ku**
**Tokyo 102-0075 (JP)**

• **Yao, Hironobu**
**Chiyoda-ku**
**Tokyo 102-0075 (JP)**
• **Ohmuro, Yoshinori**
**Yokosuka-shi**
**Kanagawa 240-0194 (JP)**
• **Hirayama, Noritomo**
**Yokosuka-shi**
**Kanagawa 240-0194 (JP)**

(74) Representative: **MERH-IP**
**Matias Erny Reichl Hoffmann**
**Paul-Heyse-Strasse 29**
**80336 München (DE)**

(56) References cited:
**WO-A-03/102513**    **JP-A- 2000 097 742**
**US-B1- 6 564 649**

EP 1 621 856 B1

**Description**

The present invention relates to a method of measuring the flow velocity of a fluid flowing within a pipe by means of a Doppler ultrasonic flow velocity profile meter provided so as to carry out noncontacting measurement of flow velocity profile of a fluid by using the Doppler effect of an ultrasonic wave. The flow velocity profile meter transmits an ultrasonic wave to a fluid in a pipe from an ultrasonic wave transducer mounted on the outside of the pipe.

As is well-known, such a so-called clamp-on Doppler ultrasonic flow velocity profile meter measures a flow velocity profile or a flow rate of a fluid by measuring moving velocities of suspended particles or bubbles contained in the fluid on the assumption that the suspended particles or bubbles move at the same velocity as the fluid. Note that the term "velocity profile meter" is used hereinafter as a short form of "Doppler ultrasonic flow velocity profile meter" unless specified otherwise.

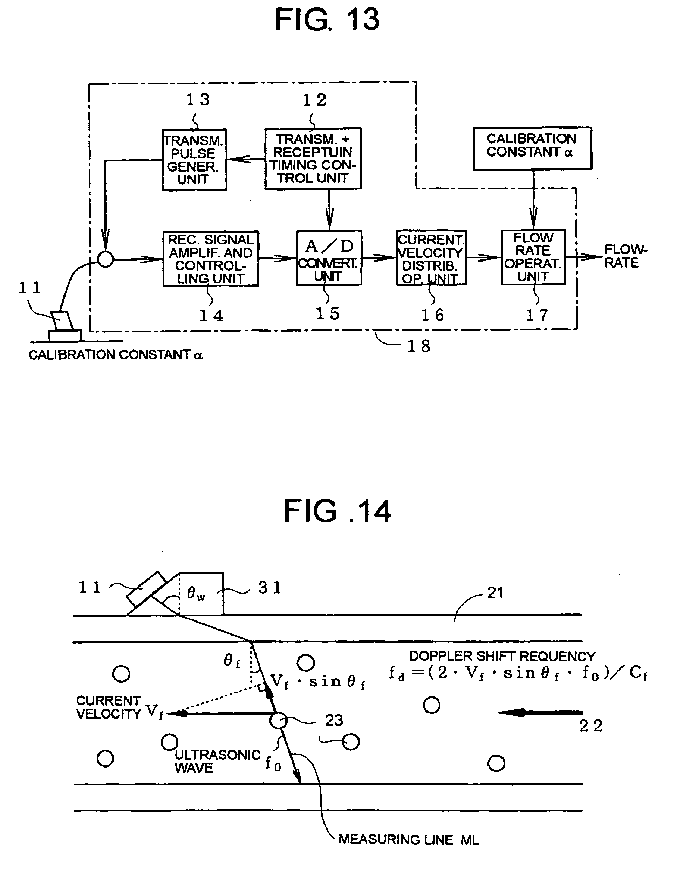

As shown in FIG. 14, a diagram illustrating the operation principle of such a velocity profile meter, an ultrasonic wave transducer 11 is secured to the outer surface of a pipe 21 with a sound wave propagative wedge 31 put between them so that the transducer 11 is inclined to the pipe 21. From the transducer 11, an ultrasonic (wave) pulse with a fundamental frequency $f_o$ is transmitted to the pipe 21 at an angle of incidence $\theta_w$. The incident ultrasonic pulse is reflected by reflectors 23 such as suspended particles in a fluid 22. The reflected echo has a frequency shifted from the fundamental frequency $f_0$ depending on the moving velocity of the reflectors 23 (flow velocity of the fluid) due to the Doppler effect. A Doppler shift frequency $f_d$ of the echo in this case is expressed by:

$$f_d = (2 \cdot V_f \cdot \sin\theta_f \cdot f_0)/C_f \tag{1}$$

where, $V_f$ is the flow velocity of the fluid 22, $\theta_f$ is an angle of refraction of the ultrasonic wave at the boundary plane between the pipe 21 and the fluid 22, and $C_f$ is the sound velocity in the fluid 22.

Therefore, the flow velocity $V_f$ of the fluid 22 can be obtained by the following expression (2). The flow velocity $V_f$ and the Doppler shift frequency $f_d$, each being a function of a position x along the radial direction, are expressed as $V_f(x)$ and $f_d(x)$, respectively:

$$V_f(x) = (C_f \cdot f_d(x))/(2 \cdot \sin\theta_f \cdot f_0). \tag{2}$$

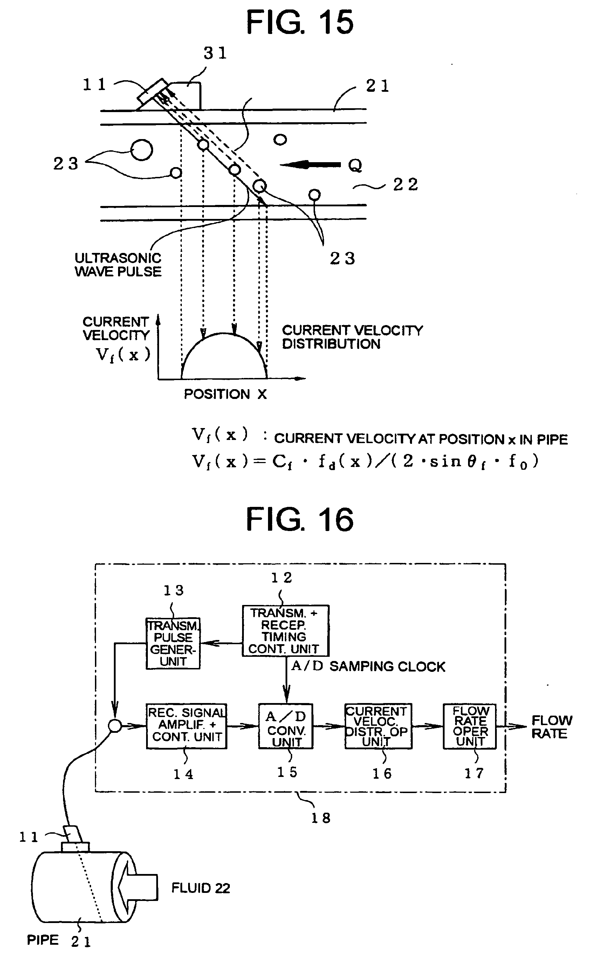

FIG. 15 is a diagram for explaining the principal part of the velocity profile meter shown in FIG. 14 and a flow velocity profile depending on the above-described position x in the pipe 21.

In accordance with expression (2), flow velocities $V_f$ on a measuring line ML of the ultrasonic pulse are measured at specified intervals to obtain a flow velocity profile. The obtained profile is integrated about the cross sectional area A of the pipe 21 as expressed in the expression (3) to obtain the flow rate of the fluid 22:

$$Q = \int V_f \cdot dA \tag{3}$$

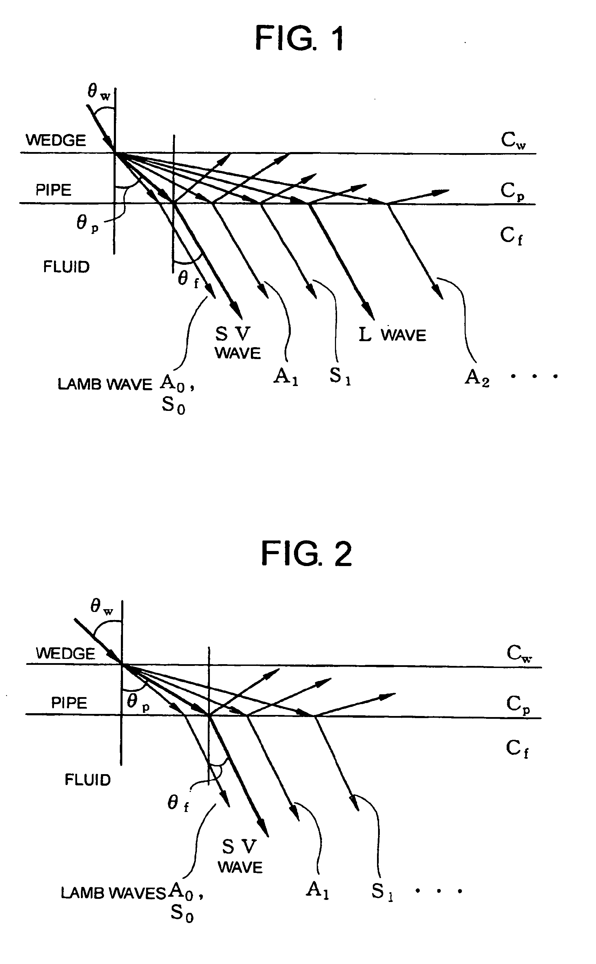

FIG. 16 is a block diagram showing the whole arrangement of the clamp-on velocity profile meter (a block diagram showing the transducer 11 and an inner arrangement of a converter 18 connected to the transducer 11). The arrangement is substantially the same as that of, for example, the Doppler ultrasonic flow meter shown in FIG. 1 of JP-A-2000-97742.

In FIG. 16, reference numeral 12 denotes a timing control unit carrying out control of the timing of transmission of an ultrasonic pulse and reception of the echo. The timing control unit 12 makes a pulse generating unit 13 start producing a pulse signal for generating an ultrasonic pulse transmitted from the transducer 11. The transducer 11 also receives the echo. A signal due to the received echo is amplified by an amplifying and controlling unit 14. The amplified received signal is subjected to analog to digital conversion at an A/D converting unit 15 according to an A/D sampling clock from the timing control unit 12. The digitized signal is subjected to an operation according to the above expression (2) at an operation unit 16, by which a flow velocity profile is obtained. The obtained flow velocity profile is further subjected to the operation according to the above expression (3) at an unit 17, from which a flow rate is obtained.

According to the above-explained principle, it must be possible to actually obtain the flow velocity $V_f$ and the flow rate Q of the fluid 22 in accordance with expression (2) and expression (3) without dependence on the transmission frequency $f_0$ of the ultrasonic pulse wave. The inventors, however, found that a difference in transmission frequency $f_0$

of the ultrasonic wave results in changes in the obtained flow velocity $V_f$ and the flow rate Q and, in particular, that such frequency dependence becomes remarkable when the pipe 21 is made of a thin metallic material, while the frequency dependence is small when the pipe 21 is made of plastic.

Moreover, in an ultrasonic flow velocity profile meter disclosed in EP 1 536 212 A (prior art according to Article 54(3) EPC and corresponding to Japanese Patent Application No. 2003-396755), an ultrasonic wave transducer is secured to a wedge to be inclined to a pipe wherein the angle of incidence of the ultrasonic wave on the pipe from the wedge is no less than the critical angle for a longitudinal wave in the pipe and no more than the critical angle for a shear wave in the pipe. This is provided so that only a shear wave is propagated in the pipe when the sound velocity of the shear wave of an ultrasonic wave propagated in the pipe is equal to or greater than the sound velocity of the longitudinal wave in the wedge (when a metallic pipe is used). According to this velocity profile meter, the echo from the reflectors in the fluid becomes a wave due to only a shear wave propagated in the pipe before being incident on the fluid. Thus, no echo due to a longitudinal wave is received by the transducer to reduce acoustic noises. However, the problem of frequency dependence of the above-described flow velocity $V_f$ and the flow rate Q is left unsolved.

It is an object of the invention to solve the above problem and provide a method of measuring the flow velocity of a fluid flowing within a pipe by means of a Doppler ultrasonic flow velocity profile meter which has a little dependence on the frequency of the ultrasonic wave used for measurement and is made capable of measuring a flow velocity and a flow rate with high accuracy.

This object is achieved by a method as claimed in claim 1, 2, ,3 and 4. Preferred embodiments of the invention are subject-matter of the dependent claims.

According to the invention, adequately setting the frequency of a transmitted ultrasonic wave or an angle of incidence of the ultrasonic wave to a pipe enables realization of a velocity profile meter having reduced frequency dependence of a measured value due to Lamb waves to bring an error of measurement to around a minimum value.

Moreover, the calibration of the ultrasonic wave transducer by means of a known flow allows an offset error to be cancelled and, along with this, allows interchangeability between transducers to be ensured, by which a high accuracy can be maintained even when the combination with a converter is changed.

In the following, preferred embodiments of the invention will be explained below with reference to drawings, in which:

FIG. 1    is a diagram showing propagation of an ultrasonic wave diagonally incident onto a pipe with an angle of incidence not more than the critical angle for a longitudinal wave in the pipe;

FIG. 2    is a diagram showing propagation of an ultrasonic wave diagonally incident onto a pipe with an angle of incidence not less than the critical angle for a longitudinal wave in the pipe and not more than the critical angle for a shear wave in the pipe;

FIG. 3    is a diagram showing examples of dispersion curves of Lamb waves;

FIG. 4    is a schematic view showing an arrangement of a velocity profile meter according to the embodiment;

FIG. 5    is a graph showing a relationship between the transmission frequency and the angle of refraction for each mode of Lamb wave;

FIG. 6    is a diagram showing a relationship between the transmission frequency and an error of flow rate measurement;

FIG. 7    is a diagram showing flow velocity profiles of water each measured about each of modes of Lamb wave;

FIG. 8    is a diagram showing a result of calculation about a relationship between the transmission frequency and a flow rate error;

FIG. 9    is a diagram showing a relationship between the wall thickness of a stainless steel pipe and an error of flow rate measurement;

FIG. 10    is a list showing examples of frequencies by pipe wall thickness, at each of which frequencies the angle of refraction for each mode of Lamb wave reaches 90°, the frequencies being calculated out as asymptotic solutions of characteristic equations of Lamb wave;

FIG. 11    is a diagram showing an arrangement of a calibration facility with an actual flow;

FIG. 12     is a diagram illustrating the operation of the calibration facility shown in FIG. 11;

FIG. 13     is a conceptual illustration of the calibration with an actual flow in the embodiment of the invention;

FIG. 14     is a diagram illustrating the operation principle of a velocity profile meter;

FIG. 15     is a diagram for explaining the principal part of the flow velocity profile meter shown in FIG. 14 and a flow velocity profile in a pipe; and

FIG. 16     is a block diagram showing the whole arrangement of the velocity profile meter.

## DESCRIPTION OF THE PREFERRED EMBODIMENT

First, according to the studies carried out by the inventors, the above-mentioned frequency dependence is caused by a dispersion phenomenon (a phenomenon of sound velocity variation depending on frequency) occurring in the pipe. It is considered that the dispersion phenomenon is, when the pipe is supposed to be a plate having the same thickness as the wall thickness of the pipe, caused by normal modes of waves propagating in the plate with the plate taken as a waveguide. Here, each of the normal modes of waves in a plate is a sound wave having a specified frequency and a specified wavelength satisfying a boundary condition and propagating along an infinitely extended flat plate having a finite thickness. The occurrence of the normal modes of waves in a plate depends on the material and the thickness of the plate.

The normal modes of waves in a plate are presented as an SH wave (a horizontally-polarized shear wave) and a Lamb wave. A Lamb wave is, as is well known, a wave in which a longitudinal wave and an SV wave (a vertically-polarized shear wave) are combined with each other while causing mode conversion on the upper face of a flat plate.

Of the normal modes of waves in a plate, the SH wave, causing no longitudinal wave at the boundary between the flat plate and a fluid, is considered not to propagate in the fluid. Therefore, it is the Lamb wave that causes the dispersion phenomenon, and the behavior of the Lamb wave is considered to be the cause of the previously described frequency dependence.

FIG. 1 and FIG. 2 are diagrams each showing a dispersion model of Lamb waves when an ultrasonic wave is diagonally incident onto a plate (a pipe) and propagates in the plate. FIG. 1 shows the case in which the angle of incidence $\theta_w$ onto the pipe is no greater ($\leq$) than the critical angle for a longitudinal wave in the pipe. FIG. 2 shows the case in which (the critical angle for a longitudinal wave in the pipe) $\leq \theta_w \leq$ (the critical angle for a shear wave in the pipe).

According to the studies carried out by the inventors, it is considered that a plurality of Lamb waves are induced in the pipe with their frequency kept at constant due to difference in phase velocities of the lamb waves (= w/k, w: angular frequency, k: wave number) when an ultrasonic wave is incident onto a wedge on the pipe. With $\theta_w \leq$ (the critical angle for a longitudinal wave in the pipe) as shown in FIG. 1, antisymmetric Lamb waves with modes $A_m$ and symmetric Lamb waves with modes $S_m$ (m represents the successive orders of mode corresponding to a difference in wavelengths given as m = 0, 1, 2, ...), each having a wave length determined by the later explained characteristic equations, are induced in addition to an L wave (a longitudinal wave) and an SV wave. A part of the induced antisymmetric and symmetric Lamb waves are incident onto the fluid. Moreover, as shown in FIG. 2, with (the critical angle for a longitudinal wave in the pipe) $\leq \theta_w \leq$ (the critical angle for a shear wave in the pipe), Lamb waves with the modes $A_m$ and those with the modes $S_m$ are induced in addition to the SV wave in the same way, a part of which being incident onto the fluid.

According to Cho-onpa Benran Henshu Iin-kai (Ultrasonics Handbook Editorial Committee), Ed., Cho-onpa Benran (Ultrasonics Handbook), pp63 to 65, Maruzen Co., Ltd. (in Japanese)) (reference ([1]), the characteristic equations of Lamb waves are expressed by the expressions (4) to (7):

$$\beta_1{}^2 = (-\beta_2)^2 = (\omega/V_l)^2 - k^2 \qquad (4)$$

$$\beta_3{}^2 = (-\beta_4)^2 = (\omega/V_s)^2 - k^2 \qquad (5)$$

$$\tan(\beta_1 d/2)/\tan(\beta_3 d/2) = -(k^2 - \beta_3{}^2)^2/(4k^2\beta_1\beta_3): \text{ in the case of symmetric mode} \qquad (6)$$

$$\tan(\beta_3 d/2)/\tan(\beta_1 d/2) = -(k^2 - \beta_3^2)^2/(4k^{2\beta}{}_1\beta_3): \text{ in the case of antisymmetric mode.} \qquad (7)$$

In the expressions (4) to (7), $\beta_1$ to $\beta_4$ are sound propagation coefficients, d is the plate thickness, $\omega$ is the angular frequency, $V_1$ is the sound velocity of the longitudinal wave, $V_s$ is the sound velocity of the shear wave, and k is the wave number.

By the above characteristic equations, about each mode m (mth order) of the symmetric Lamb waves and the antisymmetric Lamb waves, relations between their frequencies and their wavelengths can be calculated. Moreover, a phase velocity $V_p$ and a group velocity $V_g$ as an actual propagation velocity of a wave packet (in general, $V_g \neq V_p$, and without presence of a dispersion phenomenon, $V_g = V_p$) can be obtained by the following expressions (8) and (9):

$$V_p = \omega/k \qquad (8)$$

$$V_g = \partial\omega/\partial k. \qquad (9)$$

Furthermore, from the above phase velocity and Snell's law, the angle of refraction $\theta_p$ of each mode of the Lamb wave at the pipe can be calculated.

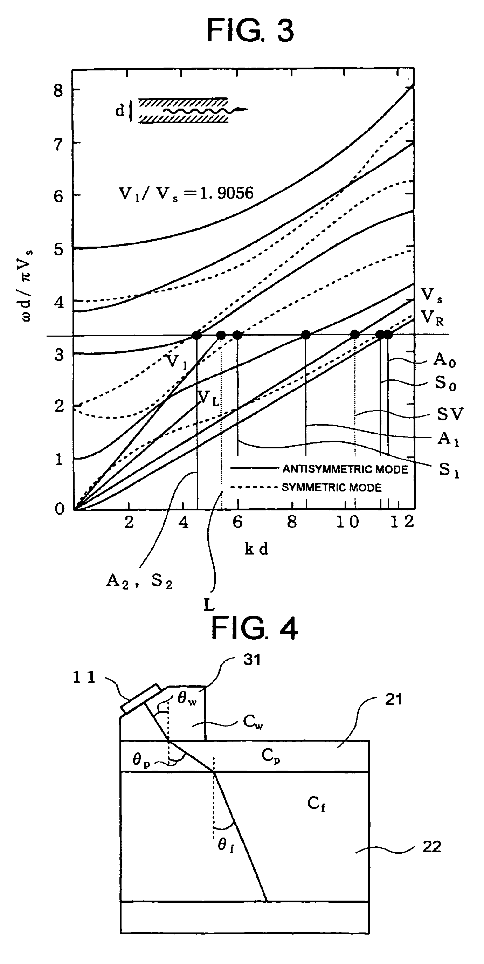

FIG. 3 is a diagram showing examples of dispersion curves (w - k dispersion curves) of Lamb waves obtained by solving the above characteristic equations. The diagram is contained on page 64 in reference [1]. Each solid line represents a dispersion curve of a respective mode $A_m$ of an antisymmetric Lamb wave and each broken line represents a dispersion curve of a respective mode $S_m$ of a symmetric Lamb wave.

The horizontal axis in FIG.3 represents the wave number (kd) of an ultrasonic wave and the vertical axis represents the transmission frequency ($\omega d/\pi V_s$) of the ultrasonic wave. A mode of a Lamb wave induced at a transmission frequency, a pipe wall thickness, and a sound velocity in a pipe is the mode of a dispersion curve intersecting a horizontal line orthogonal to the vertical axis at a point with a value corresponding to the transmission frequency. However, actually induced modes are limited to those in the case in which a critical angle determined by the sound velocity in the wedge and the phase velocities of every mode is larger than the angle of incidence $\theta_w$ onto the pipe.

The exact solutions about the frequency and the wavelength in each mode of Lamb wave are obtained by solving the previously explained characteristic equations. However, when a product kd of a wave number k and a plate thickness d is large, the calculation can be practically simplified by substituting asymptotic solutions for exact solutions. Namely, a phase velocity $V_p$ asymptotically approaches the phase velocity $V_R$ of Rayleigh wave for the zero order mode (m = 0) as is expressed in the expression (10). While, for the higher order modes (m = 1, 2, ...), the velocity $V_p$ asymptotically approaches each solution (a sound velocity $V_s$ of the shear wave) of the characteristic equations of the shear waves of the corresponding modes as are expressed in the equations (11):

$$V_p^{(A0)} = V_p^{(S0)} = V_R \quad (m = 0) \qquad (10)$$

$$V_p^{(Am)} = \omega/\{(\omega/V_s)^2 - (2m\pi/d)^2\}^{1/2}, (m = 1, 2, ...)$$
$$V_p^{(Sm)} = \omega/\{(\omega/V_s)^2 - ((2m+1)\pi/d)^2\}^{1/2}, (m = 1, 2, ...) \qquad (11)$$

In the equations (11), superscripts Am and Sm represent an mth order mode of the antisymmetric Lamb wave and of the symmetric Lamb wave, respectively.

Because of presence of an approximate solution for the equation about the phase velocity of the Rayleigh wave, in applying the above expression (10), the approximate solution is practically substituted for the exact solution to allow the calculation to be simplified.

In Katsuo Negishi et al., Cho-onpa Gijutsu (Ultrasonics Technology), pp173 to 174, Tokyo Daigaku Shuppan-kai (Publication Association of University of Tokyo) (in Japanese) (reference [2]), there is described that the exact solution for the phase velocity $V_R$ of Rayleigh wave can be obtained as the solution of the equation (12) by setting L and S as

$$L = \{1 - (V_R/V_l)^2\}^{1/2}, \; S = \{1 - (V_R/V_s)^2\}^{1/2}.$$

Furthermore, there is described that the approximate solution is expressed by the expression (13) by letting the Poisson ratio be $\sigma$:

$$4LS - (1 + S^2)^2 = 0 \tag{12}$$

$$V_R = V_S(0.87 + 1.12\sigma)/(1 + \sigma). \tag{13}$$

FIG. 4 is a schematic view showing an arrangement of a clamp-on ultrasonic flow velocity profile meter according to the embodiment. In the arrangement shown in FIG. 4 including an transducer 11, a wedge 31 and a pipe 21 of stainless steel, the relationship between the transmission frequency of the ultrasonic wave and the angle of refraction $\theta_p$ for each mode of a Lamb wave was calculated. The calculation was carried out by means of the expressions (14) and (15) by using the asymptotic solutions for the phase velocities expressed as the expressions (10) and (11) and Snell's law for the case of the angle of incidence $\theta_w$ onto the pipe 21 being not less than the critical angle for the longitudinal wave in the pipe 21 and not more than the critical angle for the shear wave (equivalent to the case shown in FIG. 2):

$$\theta_p^{(Am)} = \sin^{-1}(V_p^{(Am)}/C_w \cdot \sin\theta_w)$$
$$\theta_p^{(Sm)} = \sin^{-1}(V_p^{(Sm)}/C_w \cdot \sin\theta_w). \tag{14}$$

In the expression (14), $C_w$ is the sound velocity in the wedge 31.

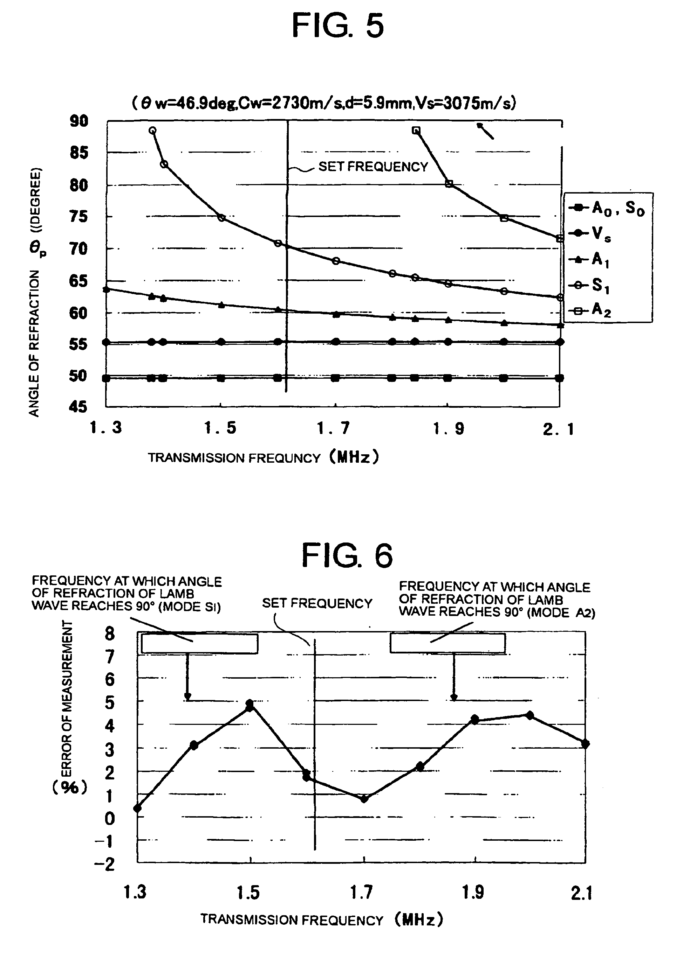

FIG. 5 is a graph showing a relationship between $f_o$, the transmission frequency, and $\theta_p$, the angle of refraction, for each mode of the Lamb wave calculated by using above expression.

Moreover, by using a pipe 21 similar to the one above, a relationship between the transmission frequency $f_0$ and an error of the flow rate measurement was measured. The result is shown in FIG. 6.

FIG. 5 and FIG. 6 indicate that the error of measurement becomes maximum around the frequency $f_{critical}$ at which angles of refraction $\theta_p^{(Am)}$ and $\theta_p^{(Sm)}$ of the Lamb waves in a certain order of a mode (for example, $A_2$, $S_1$) reach 90°. The frequency $f_{critical}$ can be obtained by the following expressions (15), derived by taking $\theta_p^{(Am)}$ and $\theta_p^{(Sm)}$ in the expressions (14) as $\theta_p^{(Am)} = \theta_p^{(Sm)} = 90°$, substituting $V_p^{(Am)}$ and $V_p^{(Sm)}$ in the expressions (11) for those in the expressions (14), and then solving the expressions (14) for $\omega$ (= $2\pi f$):

$$f_{critical}^{(Am)} = m/\{(1/V_s)^2 - (\sin\theta_w/C_w)^2\}^{1/2}/d, \; m = 1, 2, \ldots$$
$$f_{critical}^{(Sm)} = (2m + 1)/\{(1/V_s)^2 - (\sin\theta_w/C_w)^2\}^{1/2}/d/2, \; m = 1, 2, \ldots. \tag{15}$$

Therefore, by setting the transmission frequency of the ultrasonic wave at a frequency other than the above frequency $f_{critical}$, the error of measurement of flow rate can be prevented from being around a maximum.

In FIG. 5 and FIG. 6, the set frequency is shown at an intermediate point between two frequencies at which the angles of refraction $\theta_p^{(A2)}$ and $\theta_p^{(S1)}$ of modes $A_2$ and $S_1$ of Lamb waves reach 90°, respectively. At the intermediate point, the error of measurement is around a minimum. In this way, at the intermediate point between the frequencies at which the angles of refraction $\theta_p^{(A2)}$ and $\theta_p^{(S1)}$ of two successive modes of $A_2$ and $S_1$ of Lamb wave reach 90°, respectively, there exists a frequency at which the error of measurement is reduced to an amount around a minimum. Therefore, by setting the frequency at the intermediate point as the transmission frequency, it becomes possible to reduce the error of measurement to an amount around a minimum thereby avoiding the error becoming a maximum.

Each mode of a Lamb wave has a different propagation time $\tau$ in the pipe due to different angles of refraction $\theta_p$ in the pipe caused by different phase velocities, and due to different group velocities $V_g$. Group velocities Vg as asymptotic solutions for various modes of Lamb waves are shown in the expressions (16). Moreover, the propagation time $\tau$ in the pipe becomes different depending on the group velocity $V_g$ as expressed in the expressions (17):

$$V_g^{(A0)} = V_g^{(S0)} = V_R$$
$$V_g^{(Am)} = V_s^2/V_p^{(Am)}$$
$$V_g^{(Sm)} = V_s^2/V_p^{(Sm)} \tag{16}$$

$$\tau^{(Am)} = d/\cos\theta_p^{(Am)}/ V_g^{(Am)}$$
$$\tau^{(Sm)} = d/\cos\theta_p^{(Sm)}/ V_g^{(Sm)}. \tag{17}$$

Therefore, the echo is received in a form in which, on the echo of the ultrasonic wave following the primary principle expression (for example, the SV wave of the shear wave and the L wave of the longitudinal wave), echoes of other Lamb waves (interference waves) are superposed with their respective timings being shifted. Thus, the obtained flow velocity profile has flow velocity profiles derived from various modes of Lamb waves superposed on the original flow velocity profile. This causes the error of measurement of the flow velocity profile, and therefore, the error of measurement of the flow rate

The expression (18) expresses a propagation time T of a Lamb wave in a fluid (in water), where D is the inner diameter of a pipe. Due to the propagation time T in a fluid and propagation times $\tau$ in a pipe, each mode of Lamb waves causes a positional difference in the radial direction as is expressed by the expressions (19) for the antisymmetric and the symmetric Lamb waves, respectively:

$$T = D/\cos\theta_f/V_f \tag{18}$$

$$r^{(Am)}/R = 2(\tau^{(Am)} - \tau^{(Vs)})/T$$
$$r^{(Sm)}/R = 2(\tau^{(Sm)} - \tau^{(Vs)})/T \tag{19}$$

where R is the radius (= D/2) of the pipe having the inner diameter D, and r is the distance ($r \leq R$) along the radius R from the center of the pipe.

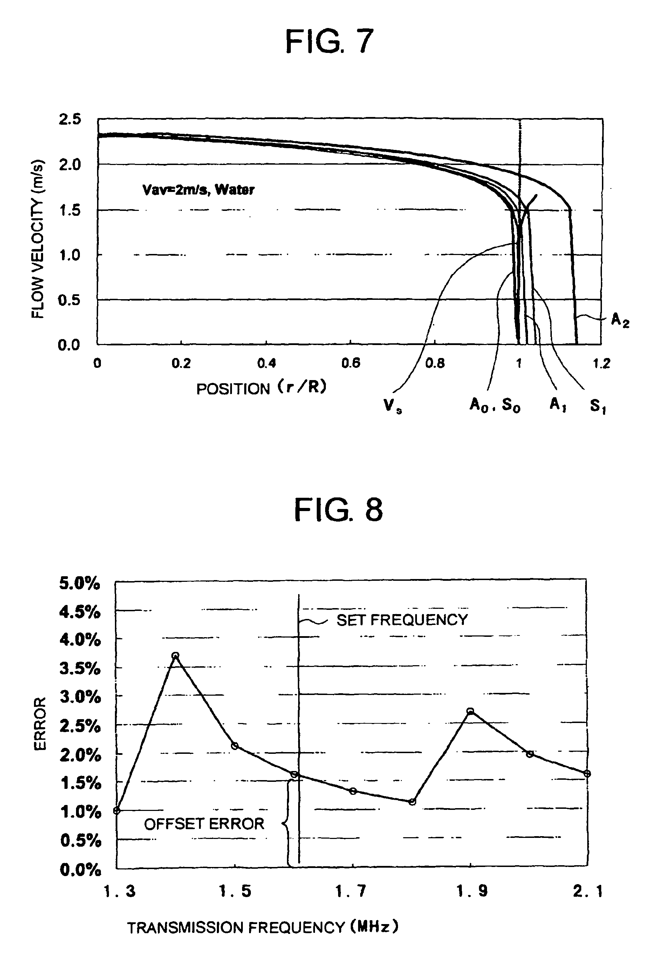

FIG. 7 is a diagram showing flow velocity profiles of water each measured about each of modes $A_0$ to $A_2$, $S_0$ and $S_1$ of Lamb wave, and the SV wave ($V_s$) as the shear wave. The horizontal axis represents the position (normalized to the radius of the pipe) from the center of the pipe in the radial direction and the vertical axis represents the measured value of the flow velocity. In the measurement, the averaged flow velocity of water is 2m/s.

It is known from FIG. 7 that the flow velocity profile is different depending on the modes $A_0$ to $A_2$, $S_0$ and $S_1$, and positional differences are caused in the radial direction for the same flow velocity, which cause errors of measurement. FIG. 8 is a diagram showing the result of flow rate error calculation carried out by using a model based on the same pipe as that used for obtaining the flow velocity profiles shown in FIG. 7. In FIG. 8, the error becomes a maximum around the frequencies $f_{critical}$ (around 1.4MHz and 1.9MHz) at each of which the angle of refraction of the Lamb wave becomes 90°.

The following expression (20) is for calculating a flow velocity profile of a turbulent flow for obtaining the flow velocity profiles shown in FIG. 7. Moreover, the expression (21) are those for calculating the flow rate error shown in FIG. 8. In FIG. 8, errors in all of the modes of a Lamb wave have been simply averaged.

$$V(r) = V_{max}\{1 - (r - r^{(Am)})/R\}^{1/n},$$

or

$$V(r) = V_{max}\{1 - (r - r^{(Sm)})/R\}^{1/n} \tag{20}$$

where n = 2.1logRe - 1.9, Re is Reynolds number Re = $V_{av}D/\nu$, $V_{max}$ is the maximum flow velocity, $V_{av}$ is an averaged

flow velocity, and $\nu$ is a kinematic viscous coefficient:

$$\Delta Q^{(Am)}/Q_0 = \{(2n + 1)/n\}\{2r^{(Am)}/R - (r^{(Am)}/R)^{1 + 1/n}\} + (1 - r^{(Am)}/R)^{2 + 1/n} - (r^{(Am)}/R)^{2 + 1/n} - 1$$

$$\Delta Q^{(Sm)}/Q_0 = \{(2n + 1)/n\}\{2r^{(Sm)}/R - (r^{(Sm)}/R)^{1 + 1/n}\} + (1 - r^{(Sm)}/R)^{2 + 1/n} - (r^{(Sm)}/R)^{2 + 1/n} - 1$$

$$\Delta Q/Q_0 = \Sigma(\Delta Q^{(Am)} + \Delta Q^{(Sm)})/Q_0/N$$

where N is the number of modes.

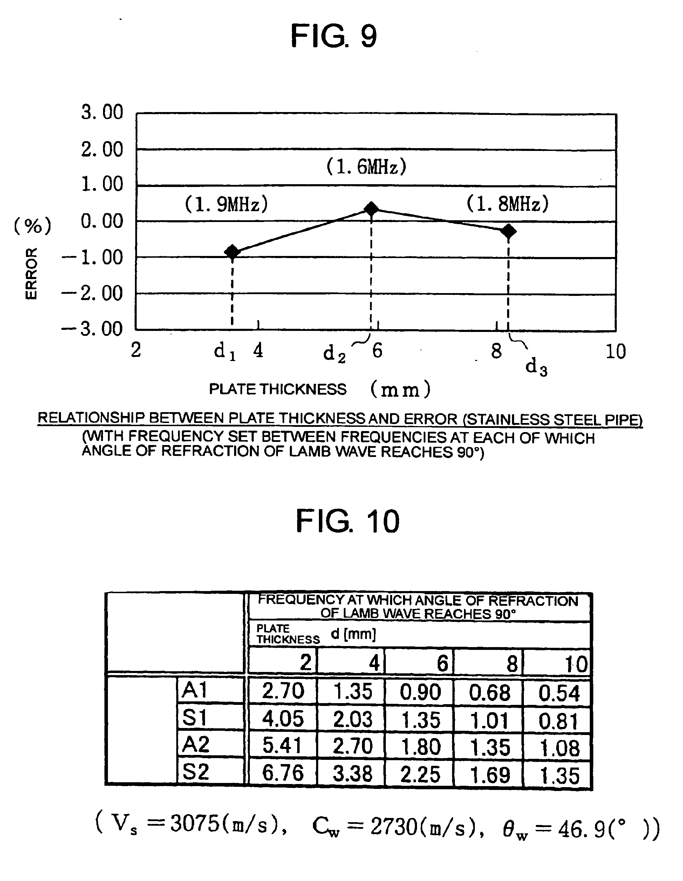

In addition, by using three kinds of pipe made of stainless steel each with a different wall thickness, the relationship between the wall thickness and the flow rate error was measured. In the measurement, the transmission frequency was set at around an intermediate point between two frequencies. At each of these two frequencies, the angle of refraction $\theta_p$ of the Lamb wave in each of two successive modes, such as the previously described modes $A_1$ and $S_1$ of Lamb wave, reaches 90°. The results are shown in FIG. 9. In FIG. 9, frequencies of 1.9MHz, 1.6MHz and 1.8MHz are set transmission frequencies corresponding to wall thickness $d_1$, $d_2$ and $d_3$, respectively.

According to FIG. 9, it becomes possible to reduce each error of measurement regardless of the wall thickness of the pipe.

Furthermore, another way of suppressing or reducing the frequency dependence as an alternative to the one above, can be presented in which the transmission frequency is made lower than the frequency at which the angle of refraction $\theta_p$ of an antisymmetric Lamb wave in a first order mode $A_1$ reaches 90°. With a frequency lower than the frequency at which the angle of refraction $\theta_p$ reaches 90°, no mode $A_1$ is generated. Along with this, only an SV wave and zero order modes of $A_0$ and $S_0$ of Lamb waves are generated, by which the frequency dependence can be considerably reduced.

FIG. 10 is a list showing examples of results of calculations of frequencies at each of which the angle of refraction $\theta_p$ for respective modes of a Lamb wave reaches 90°. The frequencies were obtained for various values of the wall thickness of the pipe as asymptotic solutions of the characteristic equations of a Lamb wave. As the order of a mode m of Lamb wave increases, the frequency becomes higher at which the angle of refraction of the Lamb wave reaches 90°. It is therefore known that a transmission frequency lower than the frequency, at which the angle of refraction $\theta_p$ of the above-described mode $A_1$ reaches 90°, causes none of Lamb wave modes of the first and higher orders to be generated.

Moreover, still another way of suppressing or reducing the frequency dependence, the angle of incidence of the ultrasonic wave onto the pipe can be made larger than the critical angle for an antisymmetric Lamb wave of the first order mode $A_1$. As the order of the mode of Lamb wave becomes higher, the phase velocity of the Lamb wave becomes faster and the critical angle becomes smaller. Therefore, an ultrasonic wave, made incident at an angle of incidence larger than the critical angle for the antisymmetric Lamb wave of the first order mode $A_1$, causes no Lamb wave modes of the first and higher orders to be generated to allow the frequency dependence to be considerably reduced.

Furthermore, making the transmission frequency lower than the cut-off frequency of the antisymmetric Lamb wave of the first order mode $A_1$ can be also considered. The cut-off frequency is the frequency at which the phase velocity becomes infinite and the group velocity becomes zero (the value at kd = 0 in the diagram in FIG. 3, i.e., the intersection with the ordinate). At a frequency lower than the cut-off frequency, no Lamb wave of the mode $A_1$ is generated regardless of the angle of incidence $\theta_w$. The cut-off frequency becomes higher as the order of the mode becomes higher. Therefore, at a frequency lower than the cut-off frequency of the Lamb wave of the mode $A_1$, no higher mode than the mode $A_1$ is generated, which allows the frequency dependence to be considerably reduced regardless of the angle of incidence $\theta_w$.

Incidentally, as shown in FIG. 6 and FIG. 8, even in the case in which the set frequency is approximately in the middle between the frequencies at which the respective angles of refraction $\theta_p$ of two successive modes of Lamb wave reach 90°, offset errors are caused as shown in FIG. 8. The offset error can be cancelled by carrying out calibration of the ultrasonic wave transducer with the actual flow in a reference pipe

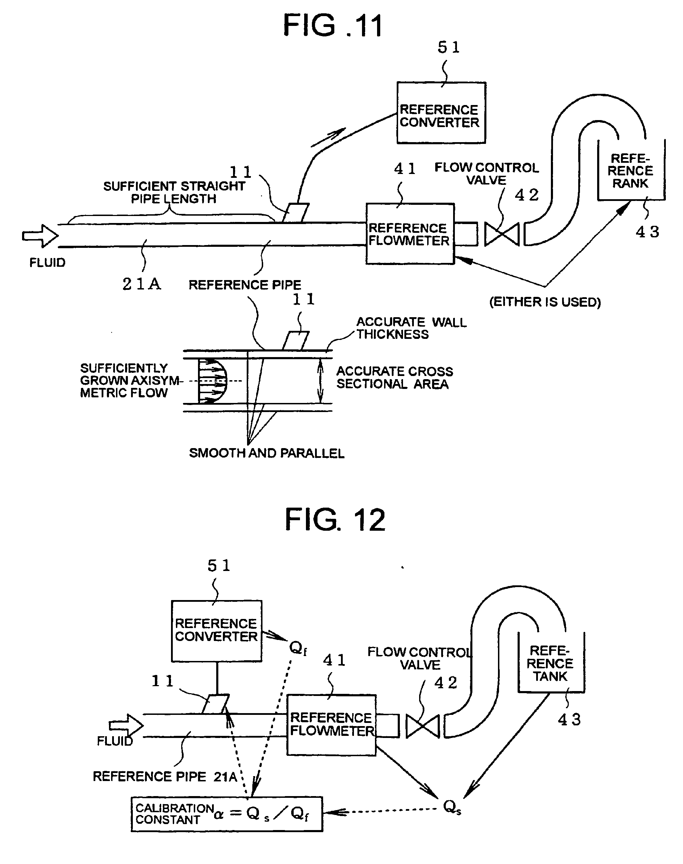

FIG. 11 is a diagram showing the arrangement of a facility for calibration with a flow of known velocity and rate. FIG. 12 is a diagram illustrating the operation of the calibration facility. The calibration facility has a reference pipe 21A, a reference flowmeter 41, a flow control valve 42 and a reference converter 51. The reference converter 51 has the arrangement with the blocks 12 to 17 in the previously presented FIG. 16.

The reference pipe 21A has its inner face processed so as to have an accurate cross sectional area A. Along with this, the inner face is smoothly finished over a sufficiently long straight pipe length so that a flow of fluid in the pipe sufficiently grows into an axisymmetric flow. Moreover, the outer face of the reference pipe 21A is also smoothly finished so as to be in parallel with the inner face.

Thus, the flow rate of the fluid flowing in the reference pipe 21A can be made accurately established or controlled by adjusting the opening of the flow control valve 42 while the flow rate is being monitored by the reference flowmeter 41. For accurately controlling the flow rate of the fluid, a reference tank 43 can be used instead of the reference flowmeter 41 to accurately measure the amount of fluid, flowing through the reference flowmeter 41 and being stored in the reference tank 43 in every unit time.

The transducer 11 is mounted on and secured to the reference pipe 21 A. The reference converter 51 is connected to the transducer 11 to carry out a flow velocity measurement and a flow rate measurement. The measurements are carried out while making the fluid flow with a known flow rate $Q_s$ accurately set by the reference flowmeter 41 and the flow control valve 42. On the basis of the flow rate $Q_f$ measured and the known flow rate $Q_s$, a calibration constant $\alpha$ of the transducer 11 is calculated as $\alpha = Q_s/Q_f$. The calibration constant $\alpha$ is stored in an ultrasonic flowmeter using the transducer 11 as the constant characteristic of the transducer 11 for carrying out calibration of the measured flow rate.

The angle of refraction $\theta_f$ at the boundary plane between the pipe and the fluid and the sound velocity $C_f$ in the fluid in the previously presented expression (2) are substituted by the angle of incidence $\theta_w$ onto the pipe and the sound velocity $C_w$ in the wedge, according to Snell's law presented as the expression (22). Thus, the expression (2) becomes the expression (23):

$$C_f/\sin\theta_f = C_p/\sin\theta_p = C_w/\sin\theta_w \tag{22}$$

$$V_f(x) = (C_w \cdot f_d(x))/(2 \cdot \sin\theta_w \cdot f_0). \tag{23}$$

For obtaining the flow velocity $V_f(x)$ of the fluid given by the expression (23) with high accuracy, $\theta_w$ and $C_w$ are corrected by the calibration with a known flow.

Compared with this, in the present invention, not only $\theta_w$ and $C_w$ but also the offset error is corrected by the calibration with the known flow.

In the invention, the calibration is carried out by a comparison of the flow rate $Q_f$ obtained by means of the transducer 11 to be calibrated with the flow rate $Q_s$ measured with high accuracy by using the reference flowmeter 41 or the reference tank 43. The ratio of $Q_s$ to $Q_f$ is taken as an actual flow calibration constant $\alpha$. Hence, $Q_s$ is expressed by the expression (24):

$$Q_s = \alpha \cdot Q_f = \int\{\alpha(C_w \cdot f_d(x))/(2 \cdot \sin\theta_w \cdot f_0)\} \cdot dA. \tag{24}$$

Namely, in FIG. 13, as a conceptual illustration of the calibration in the embodiment of the invention, the flow rate $Q_f$, measured by using the transducer 11 and the converter 18, is multiplied by the calibration constant a. This allows a measured value of the flow rate to be obtained with the same high accuracy as that of the flow rate measured by the reference flowmeter 41. Therefore, without separately measuring and correcting $\theta_w$, $C_w$ and an offset error, they can be simultaneously corrected by using only one calibration constant a.

With the calibration constant $\alpha$ taken as a constant characteristic of each transducer 11 and made shown on its nameplate, the measured flow rate is to be multiplied by the characteristic calibration constant $\alpha$ shown on the transducer 11 being used. This allows a highly accurate flow rate to be obtained even when the combination of transducer 11 and converter 18 is changed, by which interchangeability between transducers is ensured.

Moreover, as another way of correcting the offset error, calculated values of errors shown in FIG. 8 can be used with or without the calibration with a known flow. Furthermore, when a pipe with a material and wall thickness different from those of the reference pipe 21A is used, the correction can be made by using results of calculation of the difference in offset error from the offset error in the case of using the reference pipe 21A.

The invention can be also applied to the previously explained ultrasonic wave flow velocity profile meter disclosed in EP 1 536 212 A. Also in this case, the frequency dependence in the measured flow velocity and flow rate caused by Lamb waves can be reduced.

## Claims

1. A method of measuring the flow velocity of a fluid (22) flowing within a pipe (21) by means of a Doppler ultrasonic flow velocity profile meter having an ultrasonic wave transducer (11) mounted on the outside of the pipe (21), with a sound wave propagative wedge (31) provided between the transducer (11) and the pipe (21), for transmitting an ultrasonic wave so as to be incident on the fluid (22) in the pipe (21), and for receiving an ultrasonic wave, reflected by reflectors (23) existing in the fluid (22), the method comprising:

  a) setting the frequency of the ultrasonic wave transmitted by said transducer (11), and
  b) calculating a flow velocity profile of the fluid (22) based on the principle that, due to the Doppler effect, the frequency of the reflected ultrasonic wave differs from that of the transmitted wave depending on the flow velocity,

  **characterized in that**
  step a) comprises setting the frequency ($f_0$) of the transmitted ultrasonic wave to the central frequency between two frequencies at each of which said angle of refraction ($\theta_p$) of two successive Lamb wave modes is 90°, the two frequencies being calculated from the angle of incidence ($\theta_w$) of the ultrasonic wave on the pipe (21) from the wedge (31), the sound velocity in the wedge (31), sound velocities of a shear wave and a longitudinal wave in the pipe (21), and the wall thickness of the pipe (21).

**2.** A method of measuring the flow velocity of a fluid (22) flowing within a pipe (21) by means of a Doppler ultrasonic flow velocity profile meter having an ultrasonic wave transducer (11) mounted on the outside of the pipe (21), with a sound wave propagative wedge (31) provided between the transducer (11) and the pipe (21), for transmitting an ultrasonic wave so as to be incident on the fluid (22) in the pipe (21), and for receiving an ultrasonic wave, reflected by reflectors (23) existing in the fluid (22), the method comprising:

  a) setting the frequency of the ultrasonic wave transmitted by said transducer (11), and
  b) calculating a flow velocity profile of the fluid (22) based on the principle that, due to the Doppler effect, the frequency of the reflected ultrasonic wave differs from that of the transmitted wave depending on the flow velocity,

  **characterized in that**
  step a) comprises setting the frequency ($f_0$) of the transmitted ultrasonic wave to a frequency other than the frequency at which the angle of refraction ($\theta_p$) of a wave in each mode of Lamb waves upon entry into the pipe wall is 90°, the frequency being calculated from the angle of incidence ($\theta_w$) of the ultrasonic wave on the pipe (21) from the wedge (31), the sound velocity in the wedge (31), sound velocities of a shear wave and a longitudinal wave in the pipe (21), and the wall thickness of the pipe (21) so as to be lower than the frequency at which said angle of refraction ($\theta_p$) of a first order mode antisymmetric Lamb wave in the pipe (21) is 90°.

**3.** A method of measuring the flow velocity of a fluid (22) flowing within a pipe (21) by means of a Doppler ultrasonic flow velocity profile meter having an ultrasonic wave transducer (11) mounted on the outside of the pipe (21), with a sound wave propagative wedge (31) provided between the transducer (11) and the pipe (21), for transmitting an ultrasonic wave so as to be incident on the fluid (22) in the pipe (21), and for receiving an ultrasonic wave, reflected by reflectors (23) existing in the fluid (22), the method comprising:

  a) setting the frequency of the ultrasonic wave transmitted by said transducer (11), and
  b) calculating a flow velocity profile of the fluid (22) based on the principle that, due to the Doppler effect, the frequency of the reflected ultrasonic wave differs from that of the transmitted wave depending on the flow velocity,

  **characterized in that**
  step a) comprises setting the frequency ($f_o$) of the transmitted ultrasonic wave to a frequency lower than the cutoff frequency of a first order mode antisymmetric Lamb wave, the cutoff frequency being determined from a dispersion curve of the Lamb waves.

**4.** A method of measuring the flow velocity of a fluid (22) flowing within a pipe (21) by means of a Doppler ultrasonic flow velocity profile meter having an ultrasonic wave transducer (11) mounted on the outside of the pipe (21), with a sound wave propagative wedge (31) provided between the transducer (11) and the pipe (21), for transmitting an ultrasonic wave so as to be incident on the fluid (22) in the pipe (21), and for receiving an ultrasonic wave, reflected by reflectors (23) existing in the fluid (22), the method comprising:

  a) calculating a flow velocity profile of the fluid (22) based on the principle that, due to the Doppler effect, the frequency of the reflected ultrasonic wave differs from that of the transmitted wave depending on the flow velocity,
  **characterized by**
  b) calculating the angle of incidence at which the angle of refraction ($\theta_p$) of a first order mode antisymmetric Lamb wave upon entry into the pipe wall is 90°, this latter angle of incidence being calculated from the frequency of the transmitted ultrasonic wave, the sound velocity in the wedge (31), sound velocities of a shear wave and a longitudinal wave in the pipe (21), and the wall thickness of the pipe (21), and

c) making the ultrasonic wave to be incident from the wedge (31) onto the pipe (21) at an angle of incidence ($\theta_w$) larger than the angle of incidence calculated in step b).

**5.** The method as claimed in claim 1 or 2 wherein an asymptotic solution of characteristic equations of Lamb waves is used to obtain the phase velocity of the Lamb waves for determining the frequency ($f_0$) of the transmitted ultrasonic wave.

**6.** The method as claimed in claim 4 wherein an asymptotic solution of characteristic equations of Lamb waves is used to obtain the phase velocity of the Lamb waves for determining the angle of incidence ($\theta_w$) of the transmitted ultrasonic wave.

**7.** The method as claimed in any one of claims 1 to 5, wherein the step of calculating a flow velocity profile comprises:

b1) calculating the flow rate of the flow in the pipe (21) from the flow velocity profile, and
b2) correcting the flow rate calculated in step b1) by multiplying the obtained flow rate with $\alpha$, $\alpha$ being a calibration constant $\alpha = Q_s/Q_f$, stored in the Doppler ultrasonic flow velocity profile meter, where $Q_f$ represents the flow rate derived from a flow velocity profile measured by means of the ultrasonic wave transducer (11) mounted on a reference pipe (21) through which a fluid (22) flows at a known reference flow rate, and $Q_s$ represents the reference flow rate as measured by a reference flow rate measuring device.

**Patentansprüche**

**1.** Verfahren zum Messen der Strömungsgeschwindigkeit eines Fluids (22), das in einem Rohr (21) fließt, mittels eines Doppler-Ultraschallströmungsgeschwindigkeitsprofilmessgeräts, das einen Ultraschallwellenwandler (11), der auf der Außenseite des Rohrs (21) angebracht ist, aufweist, mit einem Schallwellenfortpflanzungskeil (31), der zwischen dem Wandler (11) und dem Rohr (21) vorgesehen ist, um eine Ultraschallwelle zu übertragen, so dass sie auf das Fluid (22) im Rohr (21) trifft, und zum Empfangen einer Ultraschallwelle, die von im Fluid (22) vorhandenen Reflektoren (23) reflektiert wird, wobei das Verfahren umfasst:

a) Einstellen der Frequenz der von dem Wandler (11) übertragenen Ultraschallwelle, und
b) Berechnen eines Strömungsgeschwindigkeitsprofils des Fluids (22) auf der Grundlage des Prinzips, dass aufgrund des Dopplereffekts die Frequenz der reflektierten Ultraschallwelle von derjenigen der übertragenen Welle in Abhängigkeit von der Strömungsgeschwindigkeit verschieden ist,

**dadurch gekennzeichnet, dass**
Schritt a) das Einstellen der Frequenz ($f_0$) der übertragenen Ultraschallwelle auf die mittlere Frequenz zwischen zwei Frequenzen umfasst, auf welchen beiden der Brechungswinkel ($\theta_p$) von zwei aufeinanderfolgenden Lamb-Wellenmoden 90° beträgt und wobei die zwei Frequenzen aus dem Einfallswinkel ($\theta_w$) der Ultraschallwelle auf dem Rohr (21) von dem Keil (31), der Schallgeschwindigkeit im Keil (31), Schallgeschwindigkeiten einer Scherwelle und einer Längswelle im Rohr (21) und der Wanddicke des Rohrs (21) berechnet werden.

**2.** Verfahren zum Messen der Strömungsgeschwindigkeit eines Fluids (22), das in einem Rohr (21) fließt, mittels eines Doppler-Ultraschallströmungsgeschwindigkeitsprofilmessgeräts, das einen Ultraschallwellenwandler (11), der auf der Außenseite des Rohrs (21) angebracht ist, aufweist, mit einem Schallwellenfortpflanzungskeil (31), der zwischen dem Wandler (11) und dem Rohr (21) vorgesehen ist, um eine Ultraschallwelle zu übertragen, so dass sie auf das Fluid (22) im Rohr (21) trifft, und zum Empfangen einer Ultraschallwelle, die von im Fluid (22) vorhandenen Reflektoren (23) reflektiert wird, wobei das Verfahren umfasst:

a) Einstellen der Frequenz der von dem Wandler (11) übertragenen Ultraschallwelle, und
b) Berechnen eines Strömungsgeschwindigkeitsprofils des Fluids (22) auf der Grundlage des Prinzips, dass aufgrund des Dopplereffekts die Frequenz der reflektierten Ultraschallwelle von derjenigen der übertragenen Welle in Abhängigkeit von der Strömungsgeschwindigkeit verschieden ist,

**dadurch gekennzeichnet, dass**
Schritt a) das Einstellen der Frequenz ($f_0$) der übertragenen Ultraschallwelle auf eine andere Frequenz als die Frequenz umfasst, auf der der Brechungswinkel ($\theta_p$) einer Welle in jedem Modus von Lamb-Wellen beim Eintritt in die Rohrwand 90° beträgt, wobei die Frequenz aus dem Einfallswinkel ($\theta_w$) der Ultraschallwelle auf dem Rohr (21) von dem Keil (31), der Schallgeschwindigkeit im Keil (31), Schallgeschwindigkeiten einer Scherwelle und einer Längswelle im Rohr (21) und der Wanddicke des Rohrs (21) berechnet wird, so dass sie niedriger als die Frequenz ist, bei der der Brechungswinkel ($\theta_p$) einer antisymmetrischen Lamb-Welle eines Modus erster Ordnung im Rohr (21) 90° beträgt.

3. Verfahren zum Messen der Strömungsgeschwindigkeit eines Fluids (22), das in einem Rohr (21) fließt, mittels eines Doppler-Ultraschallströmungsgeschwindigkeitsprofilmessgeräts, das einen Ultraschallwellenwandler (11), der auf der Außenseite des Rohrs (21) angebracht ist, aufweist, mit einem Schallwellenfortpflanzungskeil (31), der zwischen dem Wandler (11) und dem Rohr (21) vorgesehen ist, um eine Ultraschallwelle zu übertragen, so dass sie auf das Fluid (22) im Rohr (21) trifft, und zum Empfangen einer Ultraschallwelle, die von im Fluid (22) vorhandenen Reflektoren (23) reflektiert wird, wobei das Verfahren umfasst:

    a) Einstellen der Frequenz der von dem Wandler (11) übertragenen Ultraschallwelle, und
    b) Berechnen eines Strömungsgeschwindigkeitsprofils des Fluids (22) auf der Grundlage des Prinzips, dass aufgrund des Dopplereffekts die Frequenz der reflektierten Ultraschallwelle von derjenigen der übertragenen Welle in Abhängigkeit von der Strömungsgeschwindigkeit verschieden ist,

**dadurch gekennzeichnet, dass**
Schritt a) das Einstellen der Frequenz ($f_0$) der übertragenen Ultraschallwelle auf eine Frequenz umfasst, die niedriger als die Grenzfrequenz einer antisymmetrischen Lamb-Welle eines Modus erster Ordnung ist, wobei die Grenzfrequenz aus einer Dispersionskurve der Lamb-Wellen bestimmt wird.

4. Verfahren zum Messen der Strömungsgeschwindigkeit eines Fluids (22), das in einem Rohr (21) fließt, mittels eines Doppler-Ultraschallströmuhgsgeschwindigkeitsprofilmessgeräts, das einen Ultraschallwellenwandler (11), der auf der Außenseite des Rohrs (21) angebracht ist, aufweist, mit einem Schallwellenfortpflanzungskeil (31), der zwischen dem Wandler (11) und dem Rohr (21) vorgesehen ist, um eine Ultraschallwelle zu übertragen, so dass sie auf das Fluid (22) im Rohr (21) trifft, und zum Empfangen einer Ultraschallwelle, die von im Fluid (22) vorhandenen Reflektoren (23) reflektiert wird, wobei das Verfahren umfasst:

    a) Berechnen eines Strömungsgeschwindigkeitsprofils des Fluids (22) auf der Grundlage des Prinzips, dass aufgrund des Dopplereffekts die Frequenz der reflektierten Ultraschallwelle von derjenigen der übertragenen Welle in Abhängigkeit von der Strömungsgeschwindigkeit verschieden ist,
    **gekennzeichnet durch**
    b) Berechnen des Einfallswinkels, bei dem der Brechungswinkel ($\theta_p$) einer antisymmetrischen Lamb-Welle eines Modus erster Ordnung beim Eintritt in die Rohrwand 90° beträgt, wobei dieser letztere Einfallswinkel aus der Frequenz der übertragenen Ultraschallwelle, der Schallgeschwindigkeit im Keil (31), Schallgeschwindigkeiten einer Scherwelle und einer Längswelle im Rohr (21) und der Wanddicke des Rohrs (21) berechnet wird, und
    c) Veranlassen, dass die Ultraschallwelle vom Keil (31) auf das Rohr (21) in einem Einfallswinkel ($\theta_w$) trifft, der größer als der in Schritt b) berechnete Einfallswinkel ist.

5. Verfahren nach Anspruch 1 oder 2, wobei eine asymptotische Lösung charakteristischer Gleichungen von Lamb-Wellen verwendet wird, um die Phasengeschwindigkeit der Lamb-Wellen zum Bestimmen der Frequenz ($f_0$) der übertragenen Ultraschallwelle zu erhalten.

6. Verfahren nach Anspruch 4, wobei eine asymptotische Lösung charakteristischer Gleichungen von Lamb-Wellen verwendet wird, um die Phasengeschwindigkeit der Lamb-Wellen zum Bestimmen des Einfallswinkels ($\theta_w$) der übertragenen Ultraschallwelle zu erhalten.

7. Verfahren nach irgendeinem der Ansprüche 1 bis 5, wobei der Schritt des Berechnens eines Strömungsgeschwindigkeitsprofils umfasst:

    b1) Berechnen der Strömungsrate der Strömung im Rohr (21) aus dem Strömungsgeschwindigkeitsprofil, und
    b2) Korrigieren der in Schritt b1) berechneten Strömungsrate durch Multiplizieren der erhaltenen Strömungsrate mit $\alpha$, wobei $\alpha$ eine Kalibrierungskonstante $\alpha = Q_s/Q_f$ ist, die im Doppler-Ultraschallströmungsgeschwindigkeitsprofilmessgerät gespeichert ist, worin $Q_f$ für die Strömungsrate steht, die von einem Strömungsgeschwindigkeitsprofil abgeleitet ist, das mittels des Ultraschallwellenwandlers (11) gemessen wird, der auf einem Bezugsrohr (21) angebracht ist, durch welches ein Fluid (22) mit einer bekannten Bezugsströmungsrate fließt, und $Q_s$ für die Bezugsströmungsrate steht, wie sie durch eine Bezugsströmungsratenmessvorrichtung gemessen wird.

**Revendications**

1. Procédé de mesure de la vitesse d'écoulement d'un fluide (22) s'écoulant dans un conduit (21), au moyen d'un profilomètre de vitesse d'écoulement ultrasonore à effet doppler, ayant un transducteur (11) d'onde ultrasonore monté sur l'extérieur du conduit (21), comprenant un coin (31) de propagation d'onde sonore prévu entre le transducteur (11) et le conduit (21), pour émettre une onde ultrasonore, de manière à ce qu'elle soit incidente sur le fluide (22) dans le conduit (21), et pour recevoir une onde ultrasonore réfléchie par des réflecteurs (23) existant dans le fluide (22), procédé dans lequel :

   a) on fixe la fréquence de l'onde ultrasonore émise par le transducteur (11), et
   b) on calcule un profil de vitesse d'écoulement du fluide (22) sur la base du principe suivant lequel, en raison de l'effet doppler, la fréquence de l'onde ultrasonore réfléchie diffère de celle de l'onde émise en fonction de la vitesse d'écoulement,

   **caractérisé en ce que**
   le stade a) comprend la fixation de la fréquence ($f_0$) de l'onde ultrasonore émise à la fréquence centrale entre deux fréquences, à chacune desquelles l'angle de réfraction ($\theta_p$) de deux modes d'onde de Lamb successifs est de 90°, les deux fréquences étant calculées à partir de l'angle d'incidence ($\theta_w$) de l'onde ultrasonore sur le conduit (21) provenant du coin (31), de la vitesse du son dans le coin (31), des vitesses du son d'une onde de cisaillement et d'une onde longitudinale dans le conduit (21) et de l'épaisseur de paroi du conduit (21).

2. Procédé de mesure de la vitesse d'écoulement d'un fluide (22) s'écoulant dans un conduit (21) au moyen d'un profilomètre de vitesse d'écoulement ultrasonore à effet doppler, ayant un transducteur (11) d'onde ultrasonore monté sur l'extérieur du conduit (21), comprenant un coin (31) de propagation d'onde sonore prévu entre le transducteur (11) et le conduit (21), pour émettre une onde ultrasonore de manière à ce qu'elle soit incidente sur le fluide (22) dans le conduit (21), et pour recevoir une onde ultrasonore, réfléchie par des réflecteurs (23) existant dans le fluide (22), procédé dans lequel :

   a) on fixe la fréquence de l'onde ultrasonore émise par le transducteur (11), et
   b) on calcule un profil de vitesse d'écoulement du fluide (22) sur la base du principe suivant lequel, en raison de l'effet doppler, la fréquence de l'onde ultrasonore réfléchie diffère de celle de l'onde émise en fonction de la vitesse d'écoulement,

   **caractérisé en ce que**
   le stade a) comprend fixer la fréquence ($f_0$) de l'onde ultrasonore émise à une fréquence autre que la fréquence à laquelle l'angle de réfraction ($\theta_p$) d'une onde dans chaque mode d'onde de Lamb après entrée dans la paroi du conduit est de 90°, la fréquence étant calculée à partir de l'angle d'incidence ($\theta_w$) de l'onde ultrasonore sur le conduit (21) provenant du coin (31), de la vitesse du son dans le coin (31), des vitesses du son d'une onde de cisaillement et d'une onde longitudinale dans le conduit (21) et de l'épaisseur de paroi du conduit (21), de manière à être plus basse que la fréquence à laquelle l'angle de réfraction ($\theta_p$) de l'onde de Lamb antisymétrique de mode du premier ordre dans le conduit (21) est de 90°.

3. Procédé de mesure de la vitesse d'écoulement d'un fluide (22) s'écoulant dans un conduit (21) au moyen d'un profilomètre de vitesse d'écoulement ultrasonore à effet doppler, ayant un transducteur (11) d'onde ultrasonore monté sur l'extérieur du conduit (21), comprenant un coin (31) de propagation d'onde sonore prévu entre le transducteur (11) et le conduit (21), pour émettre une onde ultrasonore de manière à ce qu'elle soit incidente sur le fluide (22) dans le conduit (21), et pour recevoir une onde ultrasonore, réfléchie par des réflecteurs (23) existant dans le fluide (22), procédé dans lequel :

   a) on fixe la fréquence de l'onde ultrasonore émise par le transducteur (11), et
   b) on calcule un profil de vitesse d'écoulement du fluide (22) sur la base du principe suivant lequel, en raison de l'effet doppler, la fréquence de l'onde ultrasonore réfléchie diffère de celle de l'onde émise en fonction de la vitesse d'écoulement,

**caractérisé en ce que**
le stade a) comprend la fixation de la fréquence ($f_0$) de l'onde ultrasonore émise à une fréquence plus basse que la fréquence de coupure d'une onde de Lamb antisymétrique de mode du premier ordre, la fréquence de coupure étant déterminée à partir d'une courbe de dispersion des ondes de Lamb.

4. Procédé de mesure de la vitesse d'écoulement d'un fluide (22) s'écoulant dans un conduit (21) au moyen d'un profilomètre de vitesse d'écoulement ultrasonore à effet doppler ayant un transducteur (11) d'onde ultrasonore monté sur l'extérieur du conduit (21), comprenant un coin (31) de propagation d'onde sonore prévu entre le transducteur (11) et le conduit (21), pour émettre une onde ultrasonore de manière à ce qu'elle soit incidente sur le fluide (22) dans le conduit (21), et pour recevoir une onde ultrasonore, réfléchie par des réflecteurs (23) existant dans le fluide (22), procédé dans lequel :

a) on calcule un profil de vitesse d'écoulement du fluide (22) sur la base du principe suivant lequel, en raison de l'effet doppler, la fréquence de l'onde ultrasonore réfléchie diffère de celle de l'onde émise en fonction de la vitesse d'écoulement,
**caractérisé par**
b) le calcul de l'angle d'incidence auquel l'angle de réfraction ($\theta_p$) d'une onde de Lamb antisymétrique de mode du premier ordre après entrée dans la paroi du conduit est de 90°, ce dernier angle d'incidence étant calculé à partir de la fréquence de l'onde ultrasonore émise, de la vitesse du son dans le coin (31), des vitesses du son d'une de cisaillement et d'une onde longitudinale dans le conduit (21) et de l'épaisseur de paroi du conduit (21), et
c) on fait en sorte que l'onde ultrasonore soit incidente du coin (31) sur le conduit (21) sous un angle d'incidence ($\theta_w$) plus grand que l'angle d'incidence calculé dans le stade b).

5. Procédé suivant la revendication 1 ou 2, dans lequel on utilise une solution asymptotique d'équations caractéristiques d'ondes de Lamb pour obtenir la vitesse de phase des ondes de Lamb afin de déterminer la fréquence ($f_0$) de l'onde ultrasonore émise.

6. Procédé suivant la revendication 4, dans lequel on utilise une solution asymptotique d'équations caractéristiques d'ondes de Lamb pour obtenir la vitesse de phase des ondes de Lamb afin de déterminer l'angle d'incidence ($\theta_w$) de l'onde ultrasonore émise.

7. Procédé suivant l'une quelconque des revendications 1 à 5, dans lequel le stade de calcul d'un profil de vitesse d'écoulement comprend :

b1) le calcul du débit de l'écoulement dans le conduit (21) à partir du profil de la vitesse d'écoulement, et
b2) la correction du débit calculé dans le stade b1) en multipliant le débit obtenu par $\alpha$, $\alpha$ étant une constante d'étalonnage, $\alpha = Q_s/Q_t$, mémorisée dans le profilomètre de vitesse d'écoulement ultrasonore à effet doppler, $Q_t$ représentant le débit dérivé d'un profil de vitesse d'écoulement mesuré au moyen du transducteur (11) d'onde ultrasonore monté sur un conduit (21) de référence, dans lequel un fluide (22) passe à un débit de référence connue, et $Q_s$ représentant le débit de référence tel que mesuré par un débitmètre de référence.

# FIG. 1

# FIG. 2

# FIG. 3

# FIG. 4

# FIG. 5

( $\theta$ w=46.9deg,Cw=2730m/s,d=5.9mm,Vs=3075m/s)

SET FREQUENCY

ANGLE OF REFRACTION $\theta_p$ ((DEGREE)

TRANSMISSION FREQUNCY (MHz)

- ■ $A_0$, $S_0$
- ● $V_s$
- ▲ $A_1$
- ⊖ $S_1$
- ⊟ $A_2$

# FIG. 6

FREQUENCY AT WHICH ANGLE OF REFRACTION OF LAMB WAVE REACHES 90° (MODE SI)

SET FREQUENCY

FREQUENCY AT WHICH ANGLE OF REFRACTION OF LAMB WAVE REACHES 90° (MODE A2)

ERROR OF MEASUREMENT (%)

TRANSMISSION FREQUENCY (MHz)

## FIG. 7

Vav=2m/s, Water

FLOW VELOCITY (m/s)

POSITION (r/R)

$V_s$   $A_0, S_0$   $A_1$   $S_1$   $A_2$

## FIG. 8

ERROR

SET FREQUENCY

OFFSET ERROR

TRANSMISSION FREQUENCY (MHz)

# FIG. 9

RELATIONSHIP BETWEEN PLATE THICKNESS AND ERROR (STAINLESS STEEL PIPE)
(WITH FREQUENCY SET BETWEEN FREQUENCIES AT EACH OF WHICH
ANGLE OF REFRACTION OF LAMB WAVE REACHES 90°)

# FIG. 10

| | | FREQUENCY AT WHICH ANGLE OF REFRACTION OF LAMB WAVE REACHES 90° | | | | |
| --- | --- | --- | --- | --- | --- | --- |
| | | PLATE THICKNESS d [mm] | | | | |
| | | 2 | 4 | 6 | 8 | 10 |
| | A1 | 2.70 | 1.35 | 0.90 | 0.68 | 0.54 |
| | S1 | 4.05 | 2.03 | 1.35 | 1.01 | 0.81 |
| | A2 | 5.41 | 2.70 | 1.80 | 1.35 | 1.08 |
| | S2 | 6.76 | 3.38 | 2.25 | 1.69 | 1.35 |

$( V_s = 3075(m/s), \quad C_w = 2730(m/s), \quad \theta_w = 46.9(°) )$

# FIG .11

# FIG. 12

# FIG. 13

CALIBRATION CONSTANT α

# FIG .14

DOPPLER SHIFT REQUENCY
$$f_d = (2 \cdot V_f \cdot \sin \theta_f \cdot f_0) / C_f$$

MEASURING LINE ML

# FIG. 15

ULTRASONIC WAVE PULSE

CURRENT VELOCITY $V_f(x)$

CURRENT VELOCITY DISTRIBUTION

POSITION X

$V_f(x)$ : CURRENT VELOCITY AT POSITION x IN PIPE

$$V_f(x) = C_f \cdot f_d(x) / (2 \cdot \sin \theta_f \cdot f_0)$$

# FIG. 16

13 — TRANSM. PULSE GENER-UNIT

12 — TRANSM. + RECEP. TIMING CONT. UNIT

A/D SAMPING CLOCK

REC. SIGNAL AMPLIF. + CONT. UNIT — 14

A/D CONV. UNIT — 15

CURRENT VELOC. DISTR. OP UNIT — 16

FLOW RATE OPER UNIT — 17

FLOW RATE

18

11

FLUID 22

PIPE 21

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000097742 A
- EP 1536212 A
- JP 2003396755 A

**Non-patent literature cited in the description**

- Cho-onpa Benran Henshu Iin-kai. Cho-onpa Benran. Maruzen Co., Ltd, 63-65
- **Katsuo Negishi et al.** *Cho-onpa Gijutsu,* 173-174